# EUROPEAN PATENT APPLICATION

(11) **EP 4 563 961 A1**
(43) Date of publication of application: **04.06.2025**
(21) Application number: 24192758.1
(22) Date of filing: 05.08.2024
(51) Int. Cl.: G01M 3/28, B29C 65/00, B65B 9/00

(54) **PACKAGING MACHINE AND METHOD OF TESTING A PACKAGING MACHINE**

(30) Priority: 28.11.2023 IT 202300025320
(71) Applicant: Tetra Laval Holdings & Finance S.A., 1009 Pully (CH)
(72) Inventor: SANIBONDI, Paolo, 41123 Modena (IT); LAHRACHE, Achraf, 41123 Modena (IT); MARSELLA, Angelo, 41123 Modena (IT); GARUTI, Nicola, 41123 Modena (IT)
(74) Representative: Tetra Pak - Patent Attorneys SE

(57) **Abstract**

There is described a packaging machine (1) comprising: a control unit (25) configured to set the packaging machine (1) into a testing configuration, a pressure control unit (29) configured to control a pressure within a flow circuit (28) with the packaging machine (1) being set into the testing configuration and a pressure sensor (32) configured to measure the pressure within the flow circuit (28). The pressure control unit (29) is fluidically connected to the flow circuit (28) with the packaging machine (1) being controlled into the testing configuration. The control unit (25) is configured to control the pressure control unit (29) to set at least a reference pressure different from the ambient pressure within the flow circuit (28), monitor an absolute value of a pressure difference between the pressure determined and/or measured by the pressure sensor (32) and the determined pressure over time, and determine a tightness of the flow circuit (28) in dependence of the pressure difference over time.

## Description

### TECHNICAL FIELD

The present invention relates to a packaging machine for forming packages of a pourable product, preferentially a pourable food product.

The present invention also relates to a method of testing a packaging machine for forming package filled with a pourable product, preferentially a pourable food product.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming apparatus of the packaging machine during advancement along the vertical advancing direction.

Pillow packages are so obtained, each pillow package having a longitudinal sealing band, a top transversal sealing band and a bottom transversal sealing band.

A typical packaging machine comprises a conveying device for advancing the web of packaging material along a web advancement path and the tube formed from the web of packaging material along a tube advancement path, the sterilization apparatus for sterilizing the web of packaging material prior to its formation into the tube, a tube forming and sealing device at least partially arranged within the isolation chamber and being configured to form the tube from the advancing web of packaging material and to longitudinally seal the tube, a filling device for filling the tube with the pourable product and the package forming apparatus adapted to form, transversally seal and cut individual packages from the tube of packaging material.

The filling device comprises a filling pipe and a product circuit fluidically connected to the filling pipe and to a product delivery system.

An example packaging machine is disclosed in the patent document EP3456638B1 in the name of the Applicant. The packaging machine comprises a gas feeding device configured to direct, in use, a flow of sterile gas into the tube for obtaining a gas pressure within the tube providing a correct forming pressure. In such a way, the required hydrostatic pressure provided by the product column is reduced.

It is known that from time to time it is required to execute cleaning operations, for example of at least the filling device or of the filling device and the pressuring device. After the cleaning operation sterilization operations are executed.

Even though the known packaging machines work satisfyingly a need is felt in the sector to further improve the known packaging machines.

### DISCLOSURE OF INVENTION

It is therefore an aim of the present invention to provide an improved packaging machine for the formation of packages filled with a pourable product, preferentially a pourable food product.

Advantageously, it is a further aim of the present invention to provide an improved method of controlling the packaging machine for the formation of packages filled with a pourable product, preferentially a pourable food product.

According to the present invention, there is provided a packaging machine as claimed in claim 1.

Preferred non-limiting embodiments of the packaging machine are claimed in the claims being directly and indirectly dependent on claim 1.

According to the present invention there is also provide a method according to any one of claims 15 and 16.

### BRIEF DESCRIPTION OF THE DRAWINGS

A non-limiting embodiment of the present invention will be described by way of example with reference to the accompanying drawings, in which:
Figure 1 is a schematic view of a packaging machine according to the present invention, with parts removed for clarity;
Figure 2 is a schematic view of a detail of the packaging machine of Figure 1, with parts removed for clarity;
Figure 3 is an enlarged schematic view of some details of the packaging machine of Figure 1, with parts removed for clarity;
Figures 4 is a schematic view of a further detail of the packaging machine of Figure 1, with parts removed for clarity; and
Figure 5 is a flow diagram of a method of testing the packaging machine.

### BEST MODES FOR CARRYING OUT THE INVENTION

Number 1 indicates as a whole a packaging machine for producing packages 2, more specifically sealed packages 2, of a pourable food product, more specifically a pourable food product, such as milk, milk drinks, yoghurt, yoghurt drinks, fruit juice, wine, tomato sauce, emulsions, beverages containing pulp, salt, sugar, etc.

Packaging machine 1 is configured to form packages 2 from a tube 3 folded from a web 4 of packaging material. More specifically, in use, tube 3 extends along a longitudinal axis, even more specifically having a vertical orientation.

Web 4 of packaging material may have a multilayer structure, more specifically having heat-seal properties (i.e. portions of the multilayer packaging material can be sealed to one another).

In further detail, the multilayer packaging material may comprise at least one layer of fibrous material, such as e.g. paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product.

Moreover, the multilayer packaging material may also comprise a layer of gas- and light-barrier material, e.g. aluminum foil or ethylene vinyl alcohol (EVOH) film, preferentially being arranged between one of the layers of heat-seal plastic material and the layer of fibrous material.

Preferentially, the packaging material may also comprise a further layer of heat-seal plastic material being interposed between the layer of gas- and light-barrier material and the layer of fibrous material.

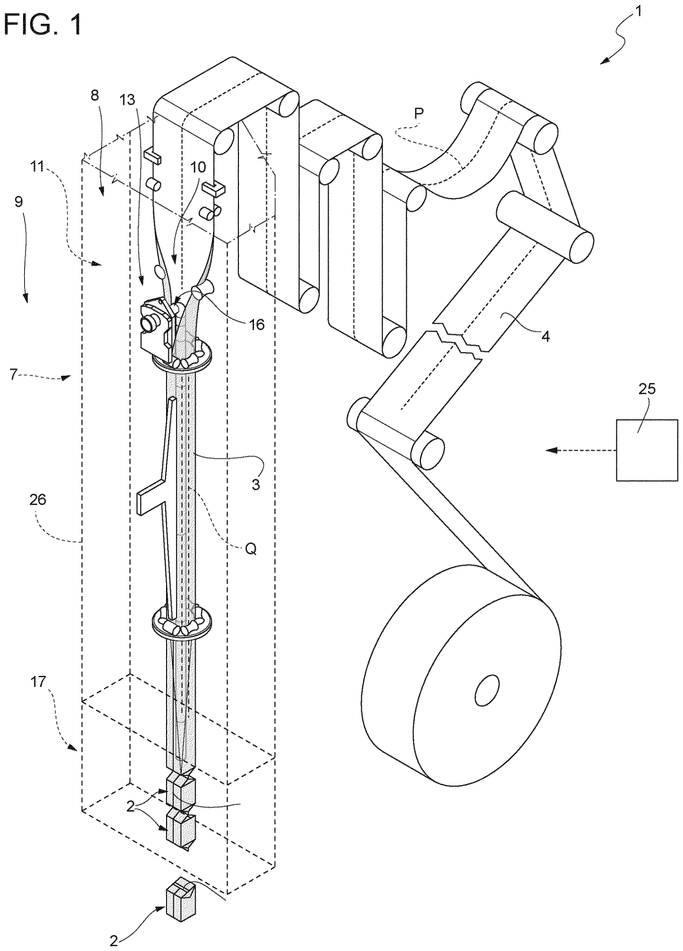

With particular reference to Figure 1, packaging machine 1 comprises a conveying device 5 configured to advance (in a known manner) web 4 along a web advancement path P, more specifically from a delivery station to a tube forming station, at which, in use, web 4 is formed into tube 3. Conveying device 5 is also configured to advance tube 3 along a tube advancement path Q.

Packaging machine 1 also comprises an isolation chamber 7 having an inner environment 8, more specifically an inner sterile environment 7, more specifically containing a sterile gas such as sterile air.

Moreover, isolation chamber 7 separates inner environment 8 from an (hostile) outer environment 9.

Packaging machine 1 further comprises a tube forming and sealing device 10 configured to form tube 3, more specifically to fold tube 3 from web 4, and to longitudinally seal tube 3.

In more detail, tube forming and sealing device 10 is at least partially arranged within inner environment 8, and is configured to form and longitudinally seal tube 3 within inner environment 8.

In further detail, tube forming and sealing device 10 is configured to gradually fold web 4 into tube 3, preferentially by overlapping a first lateral edge and a second lateral edge of web 4 with one another for forming a longitudinal seam portion of tube 3. Preferentially, tube forming and sealing device 10 is configured to longitudinally seal the longitudinal seam portion.

Additionally, conveying device 5 is configured to advance tube 3 and any intermediate of tube 3 along tube advancement path Q. In particular, with the wording intermediates of tube 3 any configuration of web 4 is meant prior to obtaining the tube structure and after folding of web 4 by tube forming and sealing device 10 has started. In other words, the intermediates of tube 3 are a result of the gradual folding of web 4 so as to obtain tube 3, preferentially by overlapping with one another the first lateral edge of web 4 and the second lateral edge of web 4.

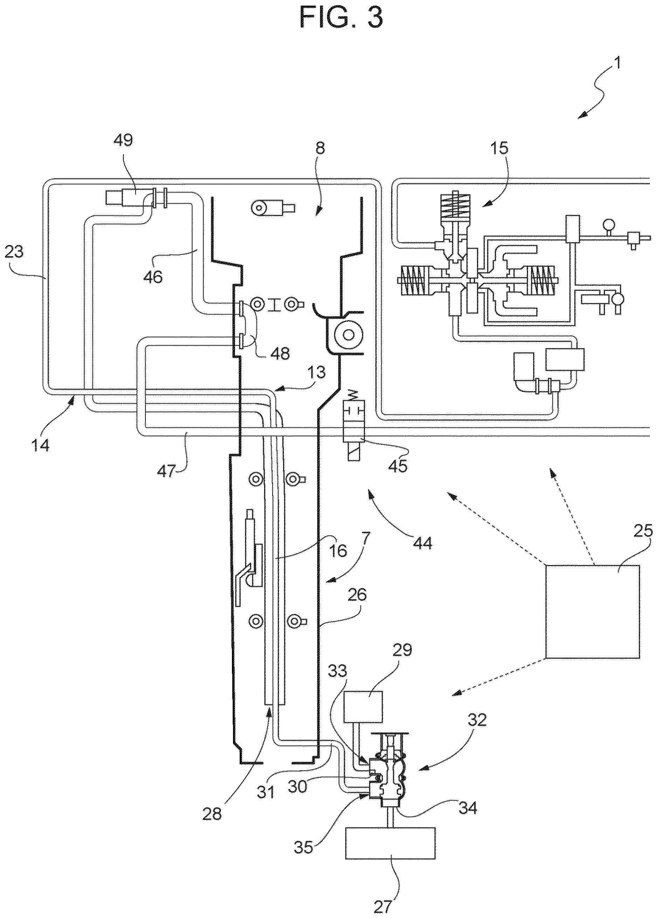

With particular reference to Figures 1 and 3, packaging machine 1 comprises a filling device 13 configured to fill packages 2 with the pourable product.

Moreover, filling device 13 is controllable and/or is controlled into fluidic connection with a product delivery system. In particular, the product delivery system is configured to deliver the pourable product to be filled to filling device 13. Additionally, the product delivery system may be configured to condition the pourable product to be filled into packages 2.

In more detail, filling device 13 is configured to fill, more specifically to continuously fill, tube 3 with the pourable product, and in particular, packaging machine 1 may manipulate tube 3 for obtaining packages 2 filled with the pourable product. Hence, filling device 13 indirectly fills packages 2 with the pourable product as filling tube 3 from which packages 2 are formed.

In more detail, filling device 13 comprises a product circuit 14 fluidically connected to the product delivery system and being configured to direct the pourable product into packages 2, more specifically into tube 3 (as a precursor of packages 2).

Additionally, packaging machine 1, more specifically filling device 13, may comprise a control valve 15 fluidically interposed between product circuit 14 and the product delivery system and being controllable into an open configuration and a closed configuration for, respectively, opening and closing the fluidic connection between product circuit 14 and the product delivery system.

With particular reference to Figure 3, product circuit 14 comprises a filling pipe 16 configured to fill tube 3 with the pourable product. Moreover, filling pipe 16 is, in use, at least partially arranged within tube 3.

Additionally, product circuit 14 may also comprise a tube assembly 23 connected to (and being in fluidic connection with) filling pipe 16 and to control valve 15. In particular, with control valve 15 being in the open configuration and the closed configuration, tube assembly 23, respectively is and is not in fluidic connection with the product delivery system.

Packaging machine 1 also comprises a package forming apparatus 17 configured to manipulate, preferentially to at least partially shape and/or transversally seal and/or transversally cut, tube 3 for obtaining packages 2 from tube 3.

In more detail, package forming apparatus 17 is arranged downstream from isolation chamber 7 along tube advancement path Q.

Moreover, isolation chamber 7 may be arranged on top of package forming apparatus 17.

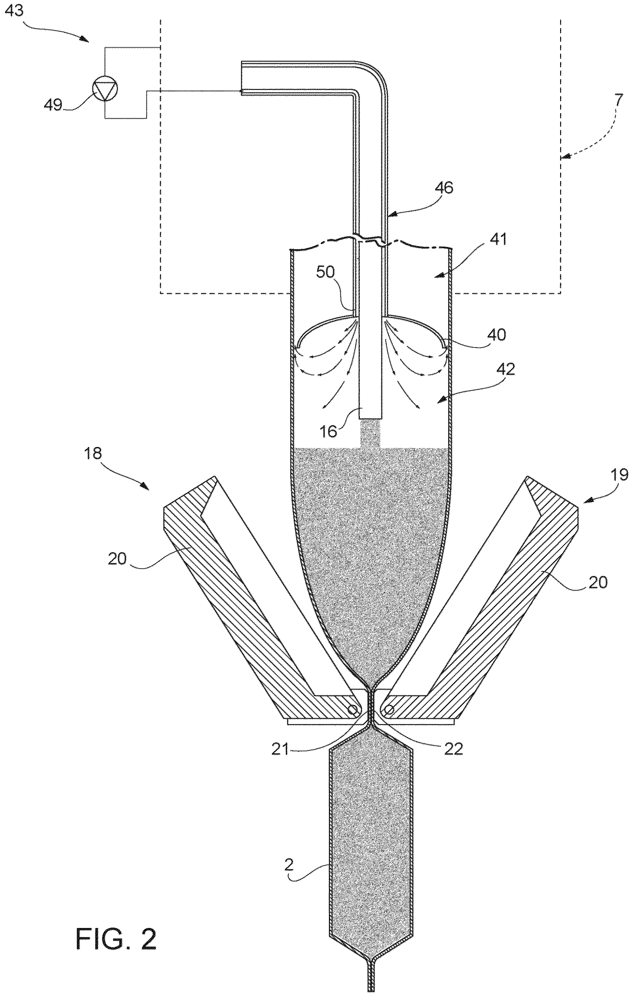

With particular reference to Figure 2, package forming apparatus 17 comprises a plurality of operative assemblies 18 (only one shown) and a plurality of counter-operative assemblies 19 (only one shown) configured to manipulate tube 3, more specifically the portions of tube 3 filled with the pourable product, for forming packages 2.

More specifically, each operative assemblies 18 is configured to cooperate with one respective counter-operative assembly 19 for manipulating, more specifically to at least partially shape and/or transversally seal and/or transversally cut, tube 3 for forming packages 2.

Additionally, package forming apparatus 17 may comprise a conveying unit configured to advance operative assemblies 18 and counter-operative assemblies 19 along respective advancement paths.

In more detail, in use, each of operative assembly 18 and each counter-operative assembly 19 cyclically advances along the respective advancement path.

In even more detail, each operative assembly 18 and each counter-operative assembly 19 comprises:
- a half-shell 20 configured to contact tube 3 and to at least partially define the shape of packages 2; and/or
- one of a sealing element 21 or a counter-sealing element 22, configured to transversally seal tube 3 between adjacent packages 2; and/or
- one of a cutting element or a counter-cutting element for transversally cutting tube 3 between adjacent packages 2.

According to a preferred non-limiting embodiment, package forming apparatus 18 is of the type described in any of patent documents EP3254980A1, EP3476751A1 in the name of the present Applicant. It is expressly understood that all the functional and structural features of the forming assembly of patent documents EP3254980A1, EP3476751A1 can be applied to package forming apparatus 18 described herein.

Packaging machine 1 comprises a control unit 25 configured to control operation of packaging machine 1.

In more detail, control unit 25 is configured to control packaging machine 1 into:
- a production configuration in which packaging machine 1 is configured to form packages 2 from tube 3 advancing along tube advancement path Q; and/or
- a cleaning configuration in which packaging machine 1 is set to be at least partially cleaned (i.e. at least portions of packaging machine 1 are cleaned or all of packaging machine 1 is cleaned); and/or
- a testing configuration in which packaging machine 1 is set to be at least partially tested (i.e. at least portions of packaging machine 1 are tested).

As will be explained in more detail, control unit 25 may be configured to control packaging machine 1 into the testing configuration after control of packaging machine 1 into the cleaning configuration (and after termination of a cleaning cycle).

In more detail, control unit 25 may be configured to at least actuate and interrupt operation of conveying device 5, tube forming and sealing device 10, filling device 13 and package forming apparatus 17 when setting packaging machine 1 into, respectively, the production configuration, the cleaning configuration and the testing configuration.

With particular reference to Figures 1 and 2, isolation chamber 7 comprises a housing 26, preferentially arranged on package forming apparatus 16, delimiting inner environment 8 (i.e. housing 26 separates inner environment 8 from outer environment 9).

Preferentially, inner environment 8 comprises (i.e. contains) the sterile gas, more specifically the sterile air, at a given pressure. Preferentially, the given pressure is (slightly) above ambient pressure for reducing the risk of any contaminants entering inner environment 8. E.g., the given pressure may be about 100 Pa to 500 Pa (0,001 bar to 0,005 bar) above ambient pressure.

With particular reference to Figure 3, packaging machine 1 comprises a cleaning device 27 configured to at least clean portions of packaging machine 1, in particular with packaging machine 1 being controlled into the cleaning configuration.

Preferentially but not necessarily control unit 25 is configured to set packaging machine 1 into the testing configuration within which tightness of at least some portions of packaging machine 1 are tested.

In particular, the portions of packaging machine 1 under test are tight when not presenting any fluid leakages.

In more detail, control unit 25 is configured to set packaging machine 1 into the testing configuration so as to test the tightness of a flow circuit 28. Control unit 25 is configured to set packaging machine 1 into the cleaning configuration so that cleaning device 27 cleans, in use, at least flow circuit 28. Preferentially, control unit 25 is configured to set packaging machine 1 into the testing configuration after the cleaning configuration.

In particular, tightness of flow circuit 28 indicates that there is (substantially) no fluidic connection between an inner volume delimited by flow circuit 28 and an outer volume.

Moreover, flow circuit 28 comprises a plurality of openings, which while packaging machine 1 is controlled into the production configuration, are open. However, while packaging machine 1 is controlled into the testing configuration, those openings are fluidically closed.

According to some embodiments, flow circuit 28 comprises product circuit 14.

Additionally, packaging machine 1 comprises a pressure control unit 29 configured to control a pressure within flow circuit 28 comprising the product circuit with the packaging machine being set int the testing configuration; and a pressure sensor 30 configured to determine and/or measure the pressure within flow circuit 28.

Moreover, pressure control unit 29 is fluidically connected to flow circuit 28 with packaging machine 1 being controlled into the testing configuration.

For example, pressure control unit 29 may be fluidically connected to flow circuit 28, more specifically to filling pipe 16, through a connection pipe 31.

Advantageously, control unit 25 is configured to set control valve 15 into the closed configuration when setting packaging machine 1 into the testing configuration. In this way, one guarantees that flow circuit 28 is fluidically closed.

Control unit 25 is configured to:
- control pressure control unit 29 to set at least a reference pressure different from the ambient pressure within flow circuit 28;
- monitor an absolute value of a pressure difference between the pressure determined and/or measured by pressure sensor 30 and the reference pressure over time; and
- determine the tightness of flow circuit 28 in dependence of the pressure difference over time.

Advantageously, control unit 25 may be configured such to control pressure control unit 29 to lock the fluidic connection with flow circuit 28 after having set the reference pressure within flow circuit 28.

In particular, in the ideal case that flow circuit 28 is tight (i.e. satisfies the tightness requirements), pressure sensor 30 measures a pressure within flow circuit 28, which remains constant and which (substantially) equals the reference pressure. In case of any unwanted fluidic communication between the inner volume delimited by flow circuit 28 and the outer volume, pressure sensor 30 measures a pressure within flow circuit 28, which changes significantly over time with respect to the reference pressure.

In a real case situation, pressure sensor 30 may determine insignificant changes in the pressure within flow circuit 28, which are, however, not attributable to the presence of a non-tightness.

It should be noted that, tightness of product circuit 14 is tested.

Moreover, product circuit 14 has fluidic opening(s), which allow the pourable product to be fed into and/or out of product circuit 14. By control valve 15 being in the closed configuration, one locks a first fluidic opening configured to allow for the feeding of the pourable product into product circuit 14. The fluidic connection to pressure control unit 29 locks a second fluidic opening, which is configured to allow for the feeding out of the pourable product from product circuit 14. It is clear that the latter second fluidic opening remains open in the sense of having the fluidic connection with pressure control unit 29, but it is locked from any fluidic connection different from the one to pressure control unit 29. In the specific case shown, the second fluidic opening, which is configured to allow for the out-feeding of the pourable product is interrupted by the presence of connection pipe 31 in the testing configuration and in the cleaning configuration.

Preferentially but not necessarily control unit 25 may be configured to control pressure control unit 29 to set the reference pressure to be larger or smaller than the ambient pressure. In other words, control unit 25 may be configured to control pressure control unit 29 such to pressurize or depressurize flow circuit 28.

More specifically, pressure control unit 29 is configured to pressurize flow circuit 28 (to set the reference pressure above ambient pressure) by introducing a gas into flow circuit 28. Moreover, pressure control unit 29 is configured to depressurize flow circuit 28 (to set the reference pressure below ambient pressure) by evacuating gas out of flow circuit 28.

Moreover, in use, in the case of having pressurized flow circuit 28, the presence of a leak leads to a significant reduction of pressure within flow circuit 28 as gas flows out of flow circuit 28 through the leak. On the other side, in use, in the case of having depressurized flow circuit 28, the presence of a leak leads to a significant increase of pressure within flow circuit 28 as gas flows into flow circuit 28 through the leak.

Hence, control unit 25 may be configured to determine tightness (i.e. there is no fluidic connection between the inner volume and the outer volume) of flow circuit 28 if the absolute value of the pressure difference over time is smaller than or equals a threshold value. In case of the absolute value being above the threshold value, control unit 25 determines the presence of a leakage (i.e. flow circuit 28 is not tight).

Control unit 25 is also configured to monitor the absolute value of the pressure difference for a determined time range. Moreover, the threshold value may be defined in dependence of the determined time range.

In other words, the tightness check after having pressurized or depressurized is executed over a defined time range.

Preferentially but not necessarily control unit 25 may be configured to control the execution of more than one control sequence, one during which flow circuit 28 is pressurized and another one during which flow circuit 28 is depressurized.

In more detail, control unit 25 may be configured to control a first control sequence, in which control unit is configured to:
- control the pressure control unit 29 to set the reference pressure to correspond to a first pressure, to monitor a first absolute value of the pressure difference between the first pressure and the pressure determined and/or measured by pressure sensor 30 for a first determined time range and to determine the tightness if the first absolute value is smaller than or equals a first threshold value; and
- control as a consequence of the determination of the tightness during the first control sequence a second control sequence, in which the control unit is configured to control pressure control unit 30 to set the reference pressure to correspond to a second pressure, to monitor a second absolute value of the pressure difference between the second pressure and the pressure determined and/or measured by the pressure sensor for a second determined time range and to determine the tightness if the second absolute value is smaller than or equals a second threshold value.

In particular, one of the first pressure and the second pressure is larger than ambient pressure and the other one of the first pressure and the second pressure is smaller than ambient pressure.

For example, the first pressure may be larger than ambient pressure and the second pressure may be smaller than ambient pressure.

In detail, the first determined time range and/or the second determined time range is/are larger than 1 minute, more specifically larger than 2 minutes, even more specifically larger or equal to 5 minutes or 10 minutes.

In detail, the first pressure is larger than 1 bar, more specifically 2,5 bar, over ambient pressure and/or the second pressure is lower than 0,2 bar, more specifically equal or lower than 0,7 bar, below ambient pressure.

According to some non-limiting embodiments, control unit 25 may be configured to emit an alarm signal in case that control unit 25 determines that flow circuit 28 is not tight (i.e. that there is a leakage) within flow circuit 28.

More specifically, the alarm signal may be one or more of an audio signal, a visual signal, a text message or the like.

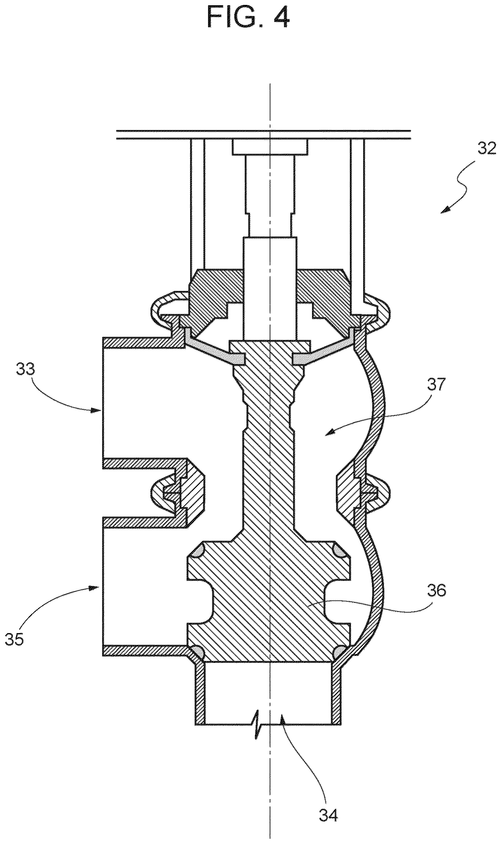

With particular reference to Figures 3 and 4, packaging machine 1 further comprises a main valve 32 configured to selectively set flow circuit 28 into fluidic connection with cleaning device 27 and pressure control unit 29.

More specifically, main valve 32 is controllable into a testing position at which main valve 32 establishes a fluidic connection between pressure control unit 29 and flow circuit 28, and a cleaning position at which main valve 32 establishes a fluidic connection between cleaning device 27 and flow circuit 28.

Even more specifically, main valve 32 may be configured to impede a fluidic connection between flow circuit 28 and cleaning device 27 and between flow circuit 28 and pressure control unit 29 when being controlled into, respectively, the testing position and the cleaning position.

In further detail, control unit 25 may control main valve 32 into the testing position and the cleaning position when controlling packaging machine 1 into, respectively, the testing configuration and the cleaning configuration.

In more detail, main valve 32 may comprise a first opening 33 being in fluidic connection with pressure control unit 29, a second opening 34 being in fluidic connection with cleaning device 27 and a third opening 35 being in fluidic connection with flow circuit 28.

Advantageously, main valve 32 is positionable into:
- the cleaning position for establishing a fluidic connection between second opening 34 and third opening 35 and for closing a fluidic connection between first opening 33 and second opening 34; and
- the testing position for establishing a fluidic connection between first opening 33 and third opening 35 and for closing a fluidic connection between second opening 34 and third opening 35.

In even further detail, main valve 32 comprises a shutter 36 moveably arranged within a channel 37 of main valve 32, channel 37 being in fluidic connection with first opening 33, second opening 34 and third opening 35.

In particular, shutter 36 is moveable so as to set main valve 32 into the cleaning position and the testing position.

Shutter 36 may be positioned such to:
- establish the fluidic connection between second opening 34 and third opening 35 and close the fluidic connection between first opening 33 and second opening 34 when main valve 32 is in the cleaning position; and
- establish the fluidic connection between first opening 33 and third opening 35 and close the fluidic connection between second opening 34 and third opening 35 when main valve 32 is in the testing position.

According to one or more embodiments and with particular reference to Figure 2, packaging machine 1 also comprises a delimiting element 40 placed, in use, within tube 3 and designed to divide tube 3, in use, into a first space 41 and a second space 42.

Additionally, packaging machine 1 may also comprise a gas feeding device 43 configured to direct, more specifically to continuously direct, in use, a flow of sterile gas, more specifically a flow of sterile air, into tube 3, more specifically into second space 42, even more specifically for obtaining a gas pressure within second space 42 being higher than the gas pressure within first space 41.

In more detail, first space 41 is delimited by tube 3, preferentially the walls of tube 3, and by delimiting element 40. Furthermore, first space 41 may open up into inner environment 8. More preferentially, delimiting element 40 delimits first space 41 at a downstream portion, in particular a bottom portion, of first space 41 itself.

In more detail, second space 42 is delimited, in use, by tube 3, in particular the walls of tube 3, delimiting element 40 and a transversal seal portion provided at an axial end of tube 3.

In further detail, first space 41 is arranged upstream of second space 42 along tube advancement path Q. Preferentially, first space 41 is arranged upstream of delimiting element 40 along tube advancement path Q. In the specific example shown, second space 42 is placed below first space 41.

Preferentially, second space 42 defines a high-pressure zone within tube 3 and first space 41 defines a low-pressure zone within tube 3.

In the context of the present application, high-pressure zone (i.e. second space 42) is to be understood such that the internal pressure lies in a range of about 5kPa to 40kPa (0,05 bar to 0,4 bar), in particular of about 10kPa to 30 kPa (0,10 bar to 0,30 bar) above ambient pressure (i.e. the pressure within second space 42 lies in a range of about 5kPa to 40kPa (0,05 bar to 0,4 bar), in particular of about 10kPa to 30 kPa (0,10 bar to 0,30 bar) above ambient pressure). In other words, second space 42 is overpressurized.

Low-pressure zone (i.e. first space 41) is to be understood such that the pressure is slightly higher than the ambient pressure. In particular, slightly higher than the ambient pressure means that the pressure lies in a range between 100 Pa to 500 Pa (0,001 bar to 0,005 bar) above ambient pressure.

In further detail, first space 41 is in (direct) fluidic connection with inner environment 8. Thus, sterile gas present in first space 41 can flow to inner environment 8.

Preferentially, tube 3 (and its intermediates) lie at least partially within isolation chamber 7 (in particular, within inner environment 8).

Preferentially, the pressure inside first space 41 is (substantially) equal to the given pressure present in isolation chamber 7, preferentially in inner environment 8. Preferentially, the pressure inside first space 41 ranges between 100 Pa to 500 Pa (0,001 bar to 0,005 bar) above ambient pressure.

Filling device 13, more specifically filling pipe 16, is configured to direct the pourable product into second space 42. Thus, in use, second space 42 may contain the pourable product and the pressurized sterile gas. The pressurized sterile gas thus provides for the required hydrostatic force needed for a correct forming of packages 2.

Advantageously, delimiting element 40 is designed to provide, in use, for at least one fluidic channel, more specifically having an annular shape, for fluidically connecting second space 42 with first space 41 allowing for, in use, a leakage flow of sterile gas from second space 42 into first space 41.

Preferentially, gas feeding device 43 is configured to provide for a variable flow of sterile gas of about 10 to 200 Nm3/h, in particular of 20 to 180 Nm3/h, even more particular of about 25 to 150 Nm3/h.

Preferentially, gas feeding device 43 is configured to vary the flow of sterile gas in dependence of the sterile gas flowing from second space 42 to first space 41.

More specifically, gas feeding device 43 is configured to control the gas pressure within second space 42 to range between 5 kPa to 40 kPa (0,05 bar to 0,40 bar), in particular between 10 kPa to 30 kPa (0,1 bar to 0,3 bar), above ambient pressure.

More specifically, gas feeding device 43 is configured to withdraw sterile gas from inner environment 8, more specifically to pressurize (to compress) the sterile gas, and to direct sterile gas, preferentially the pressurized (compressed) sterile gas into second space 42.

In more detail, gas feeding device 43 may comprise a gas delivery circuit 44 configured to direct, in use, the flow of gas into tube 3, more specifically second space 42.

Additionally, gas feeding device 43 may also comprise an auxiliary valve 45 configured to control a fluidic connection between gas delivery circuit 44 and a gas delivery source.

According to aspects of the present disclosure, flow circuit 28 comprises gas delivery circuit 44.

Advantageously, control unit 25 is configured to control auxiliary valve 45 in a closed position for closing the fluidic connection between gas delivery circuit 44 and the gas delivery source when controlling packaging machine 1 into the testing configuration.

It is noted that tightness of gas delivery circuit 44 is tested. Advantageously, gas delivery circuit 44 may be fluidically connected to pressure control unit 29 by means of connection pipe 31.

In particular, if one desires to only determine tightness of gas delivery circuit 44, connection pipe 31 may be fluidically connected to gas delivery circuit 44 and not to product circuit 14.

It is noted that flow circuit 28 may comprise gas delivery circuit 44 and product circuit 14. Gas delivery circuit 44 may define a first independent portion of flow circuit 28 and product circuit 14 may define a second independent portion of flow circuit 28. In such a way, it is possible to simultaneously test tightness of gas delivery circuit 44 and product circuit 14. Advantageously, connection pipe 31 may be configured to establish fluidic connection between product circuit 14 and gas delivery circuit 14.

According to some further detail, gas delivery circuit 44 may comprise a gas feeding pipe 46 configured to direct, in use, the flow of gas into tube 3, and an inlet pipe 47 for receiving the gas from the gas delivery source. More specifically, auxiliary valve 45 may be configured to control a fluidic connection between inlet pipe 47 and the gas delivery source. Moreover, auxiliary valve 45 may interrupt the fluidic connection between inlet pipe 47 and the gas delivery source when being in the closed position for interrupting the fluidic connection with gas delivery circuit 44.

Preferentially but not necessarily, inlet pipe 47 has an outlet opening configured to direct the gas into inner environment 8, and gas feeding pipe 46 comprises an inlet opening configured to receive the gas from the inner environment 8. In other words, there is not mechanical connection between inlet pipe 47 and gas feeding pipe 46.

Therefore, when controlling packaging machine 1 into the testing configuration, and advantageously also in the cleaning configuration, a fluidic (and mechanical) connection between inlet pipe 47 and gas feeding pipe 46 is established by means of a connection element 48 connected to and interposed between gas feeding pipe 46 and inlet pipe 47.

Advantageously, flow circuit 28 comprises gas delivery circuit 46 and connection element 48.

According to the example shown, connection element 48 can be realized in the form of an auxiliary pipe. Alternatively, connection element 48 could be a valve, such as a three-way-valve. Thereby, the respective position of a shutter of the valve may control the fluidic connection between inlet pipe 47 and gas feeding pipe 46.

Connection element 48 may be removably connected to inlet pipe 47 and gas feeding pipe 46, with packaging machine 1 being controlled into the testing configuration, and advantageously also in the cleaning configuration.

Preferentially but not necessarily Preferably, cleaning device 27 is configured to clean all portions of flow circuit 28. Thus, when referring to the specific embodiment shown, cleaning device 27 is configured to clean product circuit 14, gas delivery circuit 46 (and connection element 48).

More specifically, cleaning device 27 is configured to inject a cleaning fluid into flow circuit 28 so as to clean flow circuit 28, preferentially product circuit 14, gas delivery circuit 46 and connection element 48.

When controlling of packaging machine 1 into the testing configuration and/or the cleaning configuration, connection pipe 31 is mounted to gas delivery circuit 44 and/or product circuit 14 and/or connection element 48 is mounted to inlet pipe 47.

In more detail, before cleaning and before testing, connection element 48 is mounted to connect inlet pipe 47 to gas feeding pipe 46, and connection pipe 31 is mounted to connect gas feeding pipe 46 and filling pipe 16 to main valve 32.

In particular, gas delivery circuit 44 may comprise an aspiration device 49, such as a compressor, configured to generate aspiration forces so as to withdraw the sterile gas from inner environment 8, and more specifically to also pressurize (to compress) the sterile gas and to direct the pressurized sterile gas, more specifically through gas feeding pipe 46, into tube 3, more specifically second space 42.

More specifically, aspiration device 49 may be configured to generate the aspiration forces with packaging machine 1 being set into the production configuration.

Advantageously, aspiration device 49 may be fluidically placed within gas feeding pipe 46. Or in other words, aspiration device 49 is fluidically interposed between a first portion and a second portion of gas feeding pipe 46.

Preferentially but not necessarily, delimiting element 40 is coupled to and/or is carried by an end portion 50 of gas feeding pipe 46.

Preferentially but not necessarily, at least a portion of filling pipe 16 may extend within end portion 50 of gas feeding pipe 46. According to such an embodiment, a flow channel for the sterile gas to be fed into second space 42 may be at least partially delimited by filling pipe 16 and end portion 50.

According to an aspect of the present disclosure, packaging machine 1 further comprises a sterilization apparatus for sterilizing at least a portion of web 4.

According to a further aspect of the present disclosure, packaging machine 1 is configured to transfer packages 2 to a downstream equipment.

According to some embodiments, a packaging line is provided, the packaging line comprising packaging machine 1 and at least one downstream equipment and/or the product delivery source.

The downstream equipment is configured to receive packages 2 and to operate further actions on packages 2.

The downstream equipment includes one or more chosen from the group of a cardboard packer configured to group and pack a plurality of formed and sealed packages 2 into a carton, an accumulator configured to store a plurality of packages 2, a cap applicator configured to apply a cap or lid onto each package 2.

The present disclosure also provides a method for forming a plurality of packages 2 filled with the pourable product. Preferably, the method is carried out by packaging machine 1.

The method includes a step of controlling, during which packaging machine 1 is set into the production configuration or the cleaning configuration or the testing configuration.

In particular, packaging machine 1 is (repeatedly) controlled into the production configuration, the cleaning configuration and the testing configuration.

Moreover, while packaging machine 1 is controlled into the production configuration, packaging machine 1 forms packages 2.

While packaging machine 1 is controlled into the cleaning configuration, at least flow circuit 28 is cleaned. While packaging machine 1 is controlled into the testing configuration, tightness of at least flow circuit 28 is tested.

Advantageously, each time after stop of production, packaging machine 1 is controlled into the cleaning configuration for cleaning at least flow circuit 28 and afterwards packaging machine 1 is controlled into the testing configuration for testing tightness of at least flow circuit 28.

With packaging machine 1 being controlled in the production configuration, the method includes:
- a step of advancing web 4 along a web advancement path P, by means of conveying device 5;
- a step of forming tube 3 from the advancing web 4, through tube forming and sealing device 10;
- a step of longitudinally sealing tube 3 through tube forming and sealing device 10;
- a step of advancing the tube 3 along tube advancement path Q;
- a step of filling tube 3 with a pourable product, through filling device 13; and
- a step of forming and transversally sealing (and cutting) packages 2 from the advancing tube 3, through package forming apparatus 16.

With packaging machine 1 being controlled into the production configuration, the method also includes a step of directing a flow of sterile gas into tube 3, preferentially second space 42, through gas feeding device 43. In particular, pressuring device 43 withdraws the sterile gas from inner environment 8. In more detail, gas feeding pipe 46 directs the flow of sterile gas into tube 3. Additionally, aspiration device 49 aspires the sterile gas from inner environment 8 and directs it through gas feeding pipe 46.

Additionally, sterile gas is directed into inner environment 8 through inlet pipe 47.

With packaging machine 1 being controlled into the cleaning configuration, flow circuit 28 is cleaned.

In order to execute the cleaning, connection pipe 31 may be mounted to main valve 32 and/or product circuit 14 and/or gas delivery circuit 44.

Additionally, connection element 48 may be connected to gas feeding pipe 46 and inlet pipe 47.

With packaging machine 1 being controlled into the testing configuration, a method of testing the tightness of flow circuit 28 is provided.

The method of testing comprises the steps of:
- controlling packaging machine 1 into the testing configuration;
- setting the reference pressure, more specifically by means of pressure control unit 29, different from the ambient pressure within flow circuit 28;
- determining and/or measuring the pressure, more specifically by means of pressure sensor 30, within flow circuit 28;
- monitoring the absolute value of the pressure difference between the pressure determined and/or measured, more specifically by pressure sensor 30, and the reference pressure over time;
- determining the tightness of flow circuit 28 in dependence of the pressure difference over time.

In more detail, during the step of determining the tightness, tightness of flow circuit 28 is determined if the absolute value of the pressure difference over time remains smaller than or equals a threshold value. Otherwise (i.e. if the absolute value supersedes the threshold value), flow circuit 28 is not tight (presents a leakage).

Advantageously, during the step of setting, the reference pressure is set to be larger or smaller than the ambient pressure.

Advantageously, during the step of monitoring, the absolute value of the pressure difference is monitored for a determined time range.

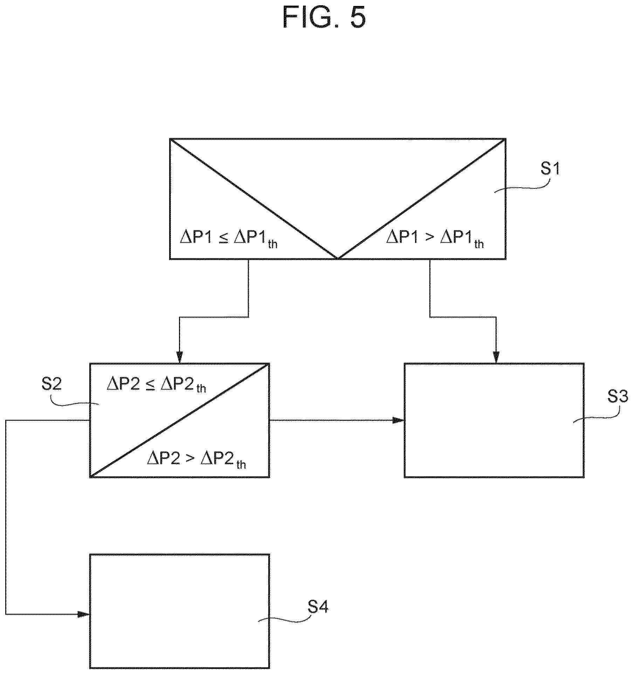

As illustrated in Figure 5, the method foresees to execute a first control sequence and as a response to the first control sequence a second control sequence. Each one of the first control sequence and the second control sequence comprises the respective steps of setting the respective reference pressure, determining and/or measuring the pressure within flow circuit 28, monitoring the respective absolute value over time and determining the tightness in dependence of the absolute value over time.

During the first control sequence, indicated as S1 in Figure 5, the reference pressure corresponds to a first pressure, a first absolute value of the pressure difference between the first pressure and the pressure determined and/or measured is monitored over time for a first determined time range and the tightness is determined if the first absolute value (ΔP1) remains smaller than or equals a first threshold value (ΔP1ₜₕ).

Moreover, as a consequence of the determination of the tightness, the second control sequence is executed (indicated as S2 in Figure 5). On the other side, if during the first control sequence, it is determined that the first absolute value (ΔP1) starts to be larger than the first threshold value (ΔP1ₜₕ), non-tightness is identified (i.e. there is a leakage in flow circuit 28), and more specifically the alarm signal is issued (indicated with S3 in Figure 5).

During the second control sequence, the reference pressure corresponds to a second pressure, a second absolute value of the pressure difference between the second pressure and the pressure determined and/or measured within flow circuit 28 is monitored over time for a second determined time range and the tightness is determined if the second absolute value (ΔP2) remains smaller than or equals a second threshold value (ΔP2ₜₕ).

If tightness is identified during the second control sequence, flow circuit 28 is considered to be tight (indicated as S4 in Figure 5).

Otherwise, if non-tightness is identified (i.e. the second absolute value starts to be larger than the second threshold value), the alarm signal is issued (indicated as S3 in Figure 5).

In more detail, one of the first pressure and the second pressure is larger than ambient pressure and the other one of the first pressure and the second pressure is smaller than ambient pressure. In this way, one guarantees that flow circuit 28 is exposed to both a pressurizing and depressurizing. In such a way it is possible to detect non-tightness more effectively; in fact, some types of non-tightness are more easily detectable by pressurizing and some other types of non-tightness are more easily detectable by depressurizing.

In detail, the first determined time range and/or the second determined time range is/are larger than 1 minute, more specifically larger than 2 minutes, even more specifically larger or equal to 5 minutes or 10 minutes.

In detail, the first pressure is larger than 1 bar, more specifically 2,5 bar, over ambient pressure and/or the second pressure is lower than 0,2 bar, more specifically lower than 0,7 bar, below ambient pressure.

The advantages of packaging machine 1 and/or the method according to the present invention will be clear from the foregoing description.

In particular, an automatic method of testing is provided, which allows to significantly reduce intervention by technical operators as necessary today.

Additionally, the Applicant has found that it is possible to effectively identify even small leakages (in particular leakages coming along with air passages down to 0,1 mm in diameter).

Clearly, changes may be made to packaging machine 1 and/or the method as described herein without, however, departing from the scope of protection as defined in the accompanying claims.

## Claims

1. A packaging machine (1) for forming packages (2) filled with a pourable product, comprising:
- a control unit (25) configured to set the packaging machine (1) into a testing configuration within which tightness of a flow circuit (28) of the packaging machine (1) is tested;
- a pressure control unit (29) configured to control a pressure within the flow circuit (28) with the packaging machine (1) being set into the testing configuration; and
- a pressure sensor (32) configured to determine and/or measure the pressure within the flow circuit (28);
wherein the pressure control unit (29) is fluidically connected to the flow circuit (28) with the packaging machine (1) being controlled into the testing configuration;
wherein the control unit (25) is configured to:
- control the pressure control unit (29) to set at least a reference pressure different from the ambient pressure within the flow circuit (28);
- monitor an absolute value of a pressure difference between the pressure measured by the pressure sensor (32) and the reference pressure over time;
- determine a tightness of the flow circuit (28) in dependence of the pressure difference over time.

2. Packaging machine (1) according to claim 1, wherein the control unit (25) is configured to determine the tightness if the absolute value of the pressure difference over time remains smaller than or equals a threshold value.

3. Packaging machine (1) according to claim 1 or 2, wherein the control unit (25) is configured to:
- control the pressure control unit (29) to set the reference pressure to be larger or smaller than the ambient pressure; and
- monitor the absolute value of the pressure difference for a determined time range.

4. Packaging machine (1) according to any one of the preceding claims, wherein the control unit (25) is configured to control a first control sequence, in which the control unit (25) is configured to control the pressure control unit (29) to set the reference pressure to correspond to a first pressure, to monitor a first absolute value of the pressure difference between the first pressure and the pressure measured by the pressure sensor (32) for a first determined time range and to determine the tightness if the first absolute value remains smaller than or equals a first threshold value;
wherein the control unit (25) is configured to control as a consequence of the determination of the tightness during the first control sequence a second control sequence, in which the control unit (25) is configured to control the pressure control unit (29) to set the reference pressure to correspond to a second pressure, to monitor a second absolute value of the pressure difference between the second pressure and the pressure determined and/or measured by the pressure sensor for a second determined time range and to determine the tightness if the second absolute value is smaller than or equals a second threshold value.

5. Packaging machine (1) according to claim 4, wherein one of the first pressure and the second pressure is larger than ambient pressure and the other one of the first pressure and the second pressure is smaller than ambient pressure.

6. Packaging machine (1) according to claim 4 or 5, wherein the first determined time range and/or the second determined time range is/are larger than 1 minute.

7. Packaging machine (1) according to any one of claims 4 to 6, wherein the first pressure is larger than 1 bar over ambient pressure and/or the second pressure is lower than 0,2 bar below ambient pressure.

8. Packaging machine (1) according to any one of the preceding claims, wherein the control unit (25) is configured to close the fluidic connection between the pressure control unit (29) and the flow circuit (28) after the pressure control unit (29) having set the reference pressure within the flow circuit (28).

9. Packaging machine (1) according to any one of the preceding claims, comprising a filling device (13) configured to fill the packages (2) with the pourable product and being controllable and/or being controlled into fluidic connection with a product delivery system;
wherein the filling device (13) comprises:
- a product circuit (14) fluidically connected to the product delivery system;
- a control valve (15) fluidically interposed between the product circuit (14) and the product delivery system and being controllable into an open configuration and a closed configuration for, respectively, opening and closing the fluidic connection between the product circuit (14) and the product delivery system;
wherein the control unit (25) is configured to set the control valve (15) into the closed configuration when setting the packaging machine (1) into the testing configuration;
wherein the flow circuit (28) comprises the product circuit (14).

10. Packaging machine (1) according to any one of the preceding claims, further comprising:
- a conveying device (5) configured to advance a web (4) of packaging material along a web advancement path (P);
- an isolation chamber (7) separating an inner environment (8) from an outer environment (9); and
- a tube forming and sealing device (10) being at least partially arranged within the isolation chamber (7) and being configured to form and longitudinally seal a tube (3) from the, in use, advancing web (4) of packaging material;
- a gas feeding device (43) comprising a gas delivery circuit (44) configured to direct, in use, a flow of gas into the tube (3) and an auxiliary valve (45) configured to control a fluidic connection between the gas delivery circuit (44) and a gas delivery source;
wherein the control unit (25) is configured to control the valve in a closed position for closing the fluidic connection between the gas delivery circuit and the gas delivery source when controlling the packaging machine into the testing configuration;
wherein the flow circuit (28) comprises the gas delivery circuit.

11. Packaging machine (1) according to claim 10, wherein the gas delivery circuit comprises a gas feeding pipe (46) configured to direct, in use, the flow of gas into the tube (3) and an inlet pipe (47) for receiving the gas;
wherein the valve (45) is configured to control a fluidic connection between the inlet pipe (47) and the gas delivery source;
wherein the flow circuit (28) comprises the gas delivery circuit (44) and a connection element (48) connected to and interposed between the gas feeding pipe (46) and the inlet pipe (47).

12. Packaging machine (1) according to claim 10 or 11, wherein the gas delivery circuit (44) comprises an aspiration device (49).

13. Packaging machine (1) according to any one of the preceding claims, further comprises a cleaning device (27) configured to clean the circuit (28);
wherein the control unit (25) is configured to control the packaging machine (1) into a cleaning configuration for cleaning the circuit (28);
wherein the packaging machine (1) further comprises a main valve (32) configured to selectively set the flow circuit (28) into fluidic connection with the cleaning device (27) and the pressure control unit (29);
wherein the main valve (32) is controllable into a testing position at which the main valve (32) establishes a fluidic connection between the pressure control unit (29) and the flow circuit (28) and a cleaning position at which the main valve (32) establishes a fluidic connection between the flow circuit (28) and the cleaning device (27);
wherein the control unit (25) is configured to set the main valve (32) into the cleaning position and the testing position when setting the packaging machine (1) into, respectively, the cleaning configuration and the testing configuration.

14. Packaging machine (1) according to any one of the preceding claims, wherein the control unit (25) is configured to emit an alarm signal if the control unit (25) determines that the flow circuit (28) is not tight and/or that the flow circuit (28) has a leakage.

15. Method for testing tightness in a packaging machine (1) configured to form packages (2) filled with a pourable product;
wherein the method comprises the steps of:
- controlling the packaging machine (1) into a testing configuration within which tightness of a flow circuit (28) of the packaging machine (1) is tested;
- determining and/or measuring the pressure within the flow circuit (28);
- monitoring an absolute value of a pressure difference between the measured pressure and a reference pressure over time, the reference pressure being different from the ambient pressure; and
determining a tightness of the flow circuit (28) in dependence of the pressure difference over time.

16. Method according to claim 15, wherein during the step of determining the tightness, tightness of the flow circuit (28) is determined if the absolute value of the pressure difference over time remains smaller than or equals a threshold value.

## Amended claims

### Amended claims in accordance with Rule 137(2) EPC.

1. A packaging machine (1) for forming packages (2) filled with a pourable product, comprising:
- a pressure sensor (32) configured to determine and/or measure a pressure within a flow circuit (28) of the packaging machine (1);
**characterized by** further comprising
- a control unit (25) configured to set the packaging machine (1) into a testing configuration within which tightness of the flow circuit (28) of the packaging machine (1) is tested;
- a pressure control unit (29) configured to control the pressure within the flow circuit (28) with the packaging machine (1) being set into the testing configuration; and
wherein the pressure control unit (29) is fluidically connected to the flow circuit (28) with the packaging machine (1) being controlled into the testing configuration;
wherein the control unit (25) is configured to:
- control the pressure control unit (29) to set at least a reference pressure different from the ambient pressure within the flow circuit (28);
- monitor an absolute value of a pressure difference between the pressure measured by the pressure sensor (32) and the reference pressure over time;
- determine a tightness of the flow circuit (28) in dependence of the pressure difference over time.

2. Packaging machine (1) according to claim 1, wherein the control unit (25) is configured to determine the tightness if the absolute value of the pressure difference over time remains smaller than or equals a threshold value.

3. Packaging machine (1) according to claim 1 or 2, wherein the control unit (25) is configured to:
- control the pressure control unit (29) to set the reference pressure to be larger or smaller than the ambient pressure; and
- monitor the absolute value of the pressure difference for a determined time range.

4. Packaging machine (1) according to any one of the preceding claims, wherein the control unit (25) is configured to control a first control sequence, in which the control unit (25) is configured to control the pressure control unit (29) to set the reference pressure to correspond to a first pressure, to monitor a first absolute value of the pressure difference between the first pressure and the pressure measured by the pressure sensor (32) for a first determined time range and to determine the tightness if the first absolute value remains smaller than or equals a first threshold value;
wherein the control unit (25) is configured to control as a consequence of the determination of the tightness during the first control sequence a second control sequence, in which the control unit (25) is configured to control the pressure control unit (29) to set the reference pressure to correspond to a second pressure, to monitor a second absolute value of the pressure difference between the second pressure and the pressure determined and/or measured by the pressure sensor for a second determined time range and to determine the tightness if the second absolute value is smaller than or equals a second threshold value.

5. Packaging machine (1) according to claim 4, wherein one of the first pressure and the second pressure is larger than ambient pressure and the other one of the first pressure and the second pressure is smaller than ambient pressure.

6. Packaging machine (1) according to claim 4 or 5, wherein the first determined time range and/or the second determined time range is/are larger than 1 minute.

7. Packaging machine (1) according to any one of claims 4 to 6, wherein the first pressure is larger than 1 bar over ambient pressure and/or the second pressure is lower than 0,2 bar below ambient pressure.

8. Packaging machine (1) according to any one of the preceding claims, wherein the control unit (25) is configured to close the fluidic connection between the pressure control unit (29) and the flow circuit (28) after the pressure control unit (29) having set the reference pressure within the flow circuit (28).

9. Packaging machine (1) according to any one of the preceding claims, comprising a filling device (13) configured to fill the packages (2) with the pourable product and being controllable and/or being controlled into fluidic connection with a product delivery system;
wherein the filling device (13) comprises:
- a product circuit (14) fluidically connected to the product delivery system;
- a control valve (15) fluidically interposed between the product circuit (14) and the product delivery system and being controllable into an open configuration and a closed configuration for, respectively, opening and closing the fluidic connection between the product circuit (14) and the product delivery system;
wherein the control unit (25) is configured to set the control valve (15) into the closed configuration when setting the packaging machine (1) into the testing configuration;
wherein the flow circuit (28) comprises the product circuit (14).

10. Packaging machine (1) according to any one of the preceding claims, further comprising:
- a conveying device (5) configured to advance a web (4) of packaging material along a web advancement path (P);
- an isolation chamber (7) separating an inner environment (8) from an outer environment (9); and
- a tube forming and sealing device (10) being at least partially arranged within the isolation chamber (7) and being configured to form and longitudinally seal a tube (3) from the, in use, advancing web (4) of packaging material;
- a gas feeding device (43) comprising a gas delivery circuit (44) configured to direct, in use, a flow of gas into the tube (3) and an auxiliary valve (45) configured to control a fluidic connection between the gas delivery circuit (44) and a gas delivery source;
wherein the control unit (25) is configured to control the valve in a closed position for closing the fluidic connection between the gas delivery circuit and the gas delivery source when controlling the packaging machine into the testing configuration;
wherein the flow circuit (28) comprises the gas delivery circuit.

11. Packaging machine (1) according to claim 10, wherein the gas delivery circuit comprises a gas feeding pipe (46) configured to direct, in use, the flow of gas into the tube (3) and an inlet pipe (47) for receiving the gas;
wherein the valve (45) is configured to control a fluidic connection between the inlet pipe (47) and the gas delivery source;
wherein the flow circuit (28) comprises the gas delivery circuit (44) and a connection element (48) connected to and interposed between the gas feeding pipe (46) and the inlet pipe (47).

12. Packaging machine (1) according to claim 10 or 11, wherein the gas delivery circuit (44) comprises an aspiration device (49).

13. Packaging machine (1) according to any one of the preceding claims, further comprises a cleaning device (27) configured to clean the circuit (28);
wherein the control unit (25) is configured to control the packaging machine (1) into a cleaning configuration for cleaning the circuit (28);
wherein the packaging machine (1) further comprises a main valve (32) configured to selectively set the flow circuit (28) into fluidic connection with the cleaning device (27) and the pressure control unit (29);
wherein the main valve (32) is controllable into a testing position at which the main valve (32) establishes a fluidic connection between the pressure control unit (29) and the flow circuit (28) and a cleaning position at which the main valve (32) establishes a fluidic connection between the flow circuit (28) and the cleaning device (27);
wherein the control unit (25) is configured to set the main valve (32) into the cleaning position and the testing position when setting the packaging machine (1) into, respectively, the cleaning configuration and the testing configuration.

14. Packaging machine (1) according to any one of the preceding claims, wherein the control unit (25) is configured to emit an alarm signal if the control unit (25) determines that the flow circuit (28) is not tight and/or that the flow circuit (28) has a leakage.

15. Method for testing tightness in a packaging machine (1) configured to form packages (2) filled with a pourable product;
wherein the method comprises the step of:
- determining and/or measuring the pressure within a flow circuit (28) of the packaging machine (1);
**characterized by** further comprising the steps of:
- controlling the packaging machine (1) into a testing configuration within which tightness of the flow circuit (28) of the packaging machine (1) is tested;
- setting a reference pressure different from the ambient pressure within the flow circuit (28), using a pressure control unit (29);
- monitoring an absolute value of a pressure difference between the measured pressure and the reference pressure over time, the reference pressure being different from the ambient pressure; and
determining a tightness of the flow circuit (28) in dependence of the pressure difference over time.

16. Method according to claim 15, wherein during the step of determining the tightness, tightness of the flow circuit (28) is determined if the absolute value of the pressure difference over time remains smaller than or equals a threshold value.
